# EUROPEAN PATENT APPLICATION

(11) **EP 4 654 423 A1**
(43) Date of publication of application: **26.11.2025**
(21) Application number: 24177313.4
(22) Date of filing: 22.05.2024
(51) Int. Cl.: H02J 7/00, B60L 58/21

(54) **ACTIVATION CONTROL OF PARALLEL CONNECTED BATTERY PACKS**

(71) Applicant: VOLVO TRUCK CORPORATION, 405 08 Göteborg (SE)
(72) Inventor: BERNTSSON, Simon, 417 53 GÖTEBORG (SE); SINGH, Shailesh, 417 47 GÖTEBORG (SE)
(74) Representative: Ström & Gulliksson AB

(57) **Abstract**

A computer system (100; 600) for controlling activation of a plurality of battery packs (20) in parallel connection, the computer system (100; 600) comprising processing circuitry (102; 602) configured to: activate a first battery pack (20-1) from among the plurality of battery packs (20); determine a compensation current which is adapted to counteract at least parts of a charge equalization current expected to be generated by a subsequent activation of an additional battery pack (20-n) from among the plurality of battery packs (20); apply the compensation current to currently activated battery pack(s) (20); and activate the additional battery pack (20-n).

## Description

### TECHNICAL FIELD

The disclosure relates generally to energy storage systems. In particular aspects, the disclosure relates to activation control of parallel connected battery packs. The disclosure can be applied to heavy-duty vehicles, such as trucks, buses, and construction equipment, among other vehicle types. The disclosure can also be applied to other areas of application, such as marine vessels, industrial applications, stationary applications, among other areas of application. Although the disclosure may be described with respect to a particular vehicle, the disclosure is not restricted to any particular vehicle.

### BACKGROUND

In a battery arrangement comprising a plurality of battery packs connected in parallel, there is an issue of unintended charge equalization currents flowing between these packs. This is especially the case under certain conditions, such as in cold temperatures and high state of charge scenarios, where there can be an increased battery internal resistance and a reduced ion mobility. Battery charge power capabilities are therefore limited, especially in these conditions. Unwanted charges circulating between battery packs might lead to violation of power limits, ultimately leading to lithium plating and battery degradation.

It is in view of the above observations and others the present inventors herein are suggesting one or more improvements to the prior art of battery pack activation control.

### SUMMARY

Charge equalization currents typically occur when batteries are connected together but no load is applied. Once the load is applied, batteries deliver uneven currents until they are balanced. However, in the latter case the charges move in same direction, i.e., from batteries to the load. In cold temperatures or high state of charge scenarios, charging capabilities are limited. Even minor variations in open-circuit voltage or internal resistance between battery packs can lead to the problems mentioned in the background section above. One existing solution to address this problem involves using only a single battery pack, but this approach has obvious drawbacks as it introduces an imbalance in the system and limits power capabilities. Another existing solution involves setting a maximum current threshold, thereby allowing the connection of multiple battery packs only when the current remains within acceptable limits. However, setting a maximum current threshold to allow the connection of multiple battery packs can limit power, reduce battery utilization, introduce complexity, create balancing challenges, and potentially compromise safety. In some cases it may even lead to a situation where the battery packs cannot be connected to one another due to a failure to fulfil the established maximum current threshold. The prior art therefore fails to suggest a satisfactory solution for managing charge equalization currents.

The present disclosure therefore aims to overcome the problem of unintended charge equalization currents flowing between battery packs by introducing a computer-controlled approach of controlling the activation of the battery packs.

According to a first aspect of the disclosure there is provided a computer system for controlling activation of a plurality of battery packs in parallel connection. The computer system comprises processing circuitry configured to activate a first battery pack from among the plurality of battery packs; determine a compensation current which is adapted to counteract at least parts of a charge equalization current expected to be generated by a subsequent activation of an additional battery pack from among the plurality of battery packs; apply the compensation current to currently activated battery pack(s); and activate the additional battery pack.

The first aspect of the disclosure may seek to eliminate or at least mitigate unintended charge equalization currents between the battery packs. By determining and applying a compensation current prior to activating additional packs, the system controls and limits unwanted charges, thus improving the availability of energy within storage systems. This improved energy management may enhance both the charging and discharging capabilities of the system and may prevent lithium plating, thereby contributing to the longevity and reliability of the batteries. Such precise control may be especially advantageous in conditions like low temperatures or high charge states, where charge equalization currents can be particularly problematic due to e.g. increased battery internal resistance and reduced ion mobility.

Optionally in some examples, including in at least one preferred example, the processing circuitry is configured to, sequentially for each additional battery pack to be activated, perform the determination of the compensation current, the application of the compensation current, and the activation of the additional battery pack. A technical benefit may include the assurance of tailored management for each battery pack, enhancing the precision of charge balancing and increasing the overall efficiency of the energy storage system.

Optionally in some examples, including in at least one preferred example, the processing circuitry is configured to obtain response signal data from a battery circuit to which the plurality of battery packs are connected after the compensation current has been applied, and activate the additional battery pack based on a value of the response signal data. A technical benefit may include the ability to make informed decisions on activating additional packs based on real-time feedback, leading to better system stability and battery performance.

Optionally in some examples, including in at least one preferred example, the processing circuitry is configured to determine the compensation current by a static estimation involving setting a predetermined voltage value based on empirical data of previous compensation current determinations in battery packs, wherein the empirical data is one or more of performance data, health data, environmental data, aging data, activation data, and auxiliary data. A technical benefit may include utilizing historical data to streamline the estimation process for compensation currents, making the system more responsive and adaptive to known battery behaviors.

Optionally in some examples, including in at least one preferred example, the processing circuitry is configured to provide the empirical data as training data to a machine learning model, the machine learning model being configured to map the empirical data to a prediction of the compensation current. A technical benefit may include the improvement of compensation current predictions through machine learning, resulting in a system that becomes more accurate and reliable over time.

Optionally in some examples, including in at least one preferred example, the processing circuitry is configured to determine the compensation current in a compensation current range comprising a first limit value being a maximum discharge ability of the battery pack to be activated, and a second limit value being a minimum charge ability of the battery pack to be activated. A technical benefit may include the optimization of compensation current within operational limits of the battery packs, ensuring safe operation without compromising on available power capacity.

Optionally in some examples, including in at least one preferred example, the processing circuitry is configured to determine the compensation current based on a maximum allowed system limit, the maximum allowed system limit being determined by properties of one or more controllable loads in a battery circuit to which the plurality of battery packs are connected. A technical benefit may include the alignment of compensation currents with the maximum system limits, ensuring that the system operates safely within the capabilities of the connected loads.

Optionally in some examples, including in at least one preferred example, the processing circuitry is configured to apply the compensation current by controlling a controllable load of a battery circuit to which the plurality of the battery pack are connected. A technical benefit may include the precise control of additional loads to apply the compensation current, contributing to the fine-tuning of power distribution and protection of battery health.

Optionally in some examples, including in at least one preferred example, the processing circuitry is configured to repeatedly determine the compensation current, apply the compensation current, and activate the additional battery pack, until a time-out condition is met. A technical benefit may include the dynamic management of battery pack activation, which can adapt to changing conditions and help maintain optimal system performance until operational limits determined by the time-out condition are reached.

Optionally in some examples, including in at least one preferred example, the time-out condition is met: once the plurality of battery packs are activated, or once a battery circuit to which the plurality of battery packs are connected has reached a maximum feasible current throughput. A technical benefit may include the efficient utilization of the system's current throughput capabilities, ensuring that all battery packs are activated without overloading the system.

Optionally in some examples, including in at least one preferred example, wherein in response to the battery circuit reaches the maximum feasible current throughput, the processing circuitry is configured to introduce a delay timer during which no further battery packs are activated, obtain battery data from a battery management system, and in response to the battery data indicating an increase in the maximum feasible current throughput, cancel the delay timer and cause a continued operation of repeatedly determining the compensation current, applying the compensation current, and activating additional battery packs. A technical benefit may include the system's ability to pause and resume operations based on current throughput capacity, ensuring that additional packs are activated only when it is safe and feasible to do so.

According to a second aspect of the disclosure there is provided a vehicle comprising the computer system of the first aspect.

According to a third aspect of the disclosure there is provided a computer-implemented method for controlling activation of a plurality of battery packs in parallel connection. The method comprises activating a first battery pack from among the plurality of battery packs; determining a compensation current which is adapted to counteract at least parts of a charge equalization current expected to be generated by a subsequent activation of an additional battery pack from among the plurality of battery packs; applying the compensation current to currently activated battery pack(s); and activating the additional battery pack.

According to a fourth aspect of the disclosure there is provided a computer program product comprising program code for performing, when executed by the processing circuitry, the method of the third aspect.

According to a fifth aspect of the disclosure there is provided a non-transitory computer-readable storage medium comprising instructions, which when executed by the processing circuitry, cause the processing circuitry to perform the method of the third aspect. The fifth aspect of the disclosure may seek to enable new and/or legacy HV components or energy storage systems to be conveniently configured, by software installation/update, for controlling activation of a plurality of battery packs in parallel connection.

The second, third, fourth and fifth aspects of the disclosure may seek to eliminate or at least mitigate unintended charge equalization currents between the battery packs. By determining and applying a compensation current prior to activating additional packs, the system controls and limits unwanted charges, thus improving the availability of energy within storage systems. This improved energy management may enhance both the charging and discharging capabilities of the system and may prevent lithium plating, thereby contributing to the longevity and reliability of the batteries. Such precise control may be especially advantageous in conditions like low temperatures or high charge states, where charge equalization currents can be particularly problematic due to e.g. increased battery internal resistance and reduced ion mobility.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
FIG. 1 is an system diagram of a heavy duty vehicle according to some examples.
FIG. 2 is an illustration of a single battery pack circuit according to some examples.
FIG. 3 is an illustration of a multiple battery pack circuit according to some examples.
FIG. 4 is an illustration of diagrams illustrating an activation control procedure of multiple battery packs connected in parallel according to some examples.
FIG. 5 is an flowchart diagram of a computer-implemented method for controlling activation of a plurality of battery packs connected in parallel according to some examples.
FIG. 6 is a schematic diagram of a computer system for implementing examples disclosed herein according to some examples.

### DETAILED DESCRIPTION

The detailed description set forth below provides information and examples of the disclosed technology with sufficient detail to enable those skilled in the art to practice the disclosure.

The subject matter of the present disclosure addresses the issues mentioned in the background section by way of controlling activation of a plurality of battery packs connected in parallel. The solution involves a computer-controlled approach that controls in what way the plurality of battery packs should be connected to one another. A first battery pack is activated, followed by a determination of a compensation current adapted to counteract at least parts of a charge equalization current expected to be generated by a subsequent activation of an additional battery pack. The determined compensation current is then applied to currently activated battery pack(s) (which is the first battery, or the first and any additional battery pack(s) that are currently activated), before the additional battery pack is activated. This computer-controlled approach effectively eliminates, or at least mitigates, the unintended charge equalization currents flowing between the respective battery packs. Accordingly, the unwanted charges circulating between the battery packs are therefore controlled to be limited, which may improve the availability of energy in energy storage systems, thereby enhancing both charge and discharge capabilities. Moreover, the approach may assist in avoiding lithium plating and safeguard against battery degradation during charging processes. This strategic control may be particularly beneficial in challenging scenarios where charge equalization currents tend to be a greater issue, such as in cold weather conditions or situations with a high battery state of charge.

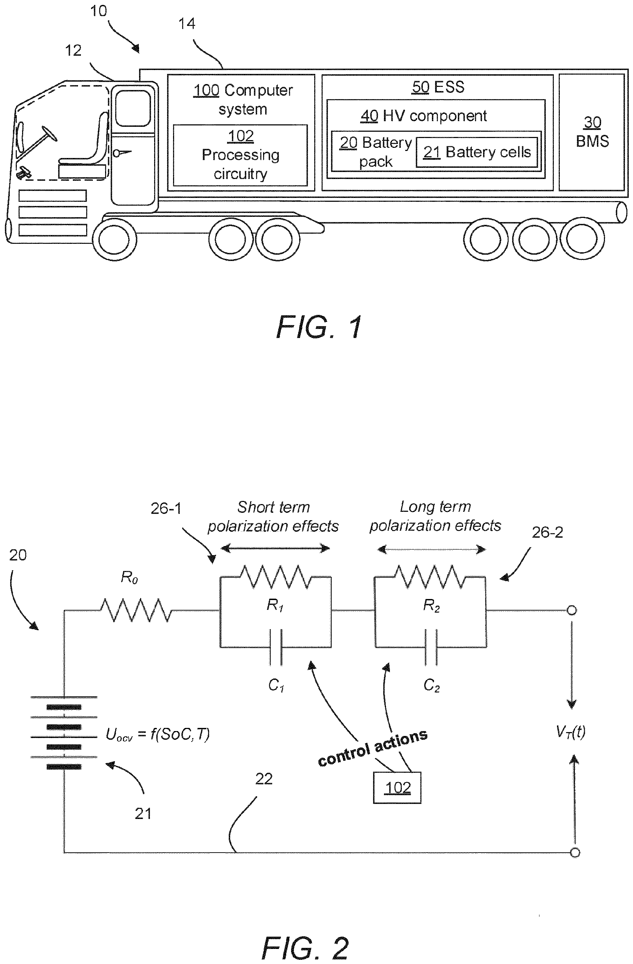

**FIG. 1** is an exemplary schematic illustration of a vehicle **10.** The vehicle **10** is illustrated as a heavy-duty vehicle, in this case a truck. The vehicle **10** is preferably an electric vehicle. In other areas of application other machines typically employing battery systems can be envisaged, such as for buses, marine vessels, construction equipment, personal vehicles, among other areas of application. The vehicle **10** comprises a tractor unit **12** which is arranged to tow a trailer unit **14.** While not explicitly shown, the vehicle **10** includes vehicle units and associated functionality as would be understood and expected by a skilled person, such as a powertrain, chassis, and various control systems.

The vehicle **10** comprises an energy storage system, ESS **50.** The ESS **50** is arranged to store electrical energy and release it as needed. The ESS **50** comprises a high-voltage, HV, component **40.** The HV component **40** is a relative term, and what is considered high voltage may depend on the context. In applicable power systems discussed herein, high voltage typically refers to voltages higher than the standard residential or commercial power distribution levels. Purely by way of example, voltage levels for HV components in traction batteries or fuel cell systems typically range between 200 V and 800 V or more, in DC fast chargers between 600 V and 1000 V, in HEV (Hybrid Electric Vehicles) between 200 and 300 V. The skilled person will appreciate that the voltage level for the HV component **40** is readily adaptable for other HV application areas.

The HV component **40** comprises a plurality of battery packs **20,** each battery pack **20** having a set of battery cells **21** responsible for storing energy in chemical form. When chemical reactions occur electrical energy is harnessed for various application. The battery cell **21** is the fundamental building block of a battery, comprising an anode, cathode, and electrolyte. Multiple battery cells **21** are combined to create a battery pack **21,** a modular unit that delivers voltage, capacity, and power for diverse applications. The battery packs **20** may include lithium-ion batteries, lithium iron phosphate batteries, solid-state batteries, graphene batteries, sodium-ion batteries, nickel-cobalt-manganese batteries, aluminum-ion batteries, or other battery types known in the art. The battery packs **20** are rechargeable and adapted to provide a source of electricity for an electric propulsion system (not shown). During charging, electricity from an external power source is used to replenish the energy stored in the battery packs **20,** the external power source typically being Electric Vehicle Supply Equipment (EVSE). EVSE refers to the infrastructure, commonly known as a charging station or charging point, that supplies electric energy for recharging the battery packs **20.** The stored electrical energy is then made available for the electric propulsion system or other power-consuming components, systems or subsystems of the vehicle **10.**

The vehicle **10** comprises a battery management system, BMS **30,** operating in tandem with the ESS **50** by monitoring and managing the individual battery cells **21** within the battery packs **20.** Typically, each battery pack **20** is associated with a BMS controller. Alternatively, the BMS **30** may include a master controller configured to monitor and manage a plurality of battery packs **20.** The BMS **30** ensures balanced charging and discharging, prevents overcharging or over-discharging, manages temperature, and optimizes overall performance and safety.

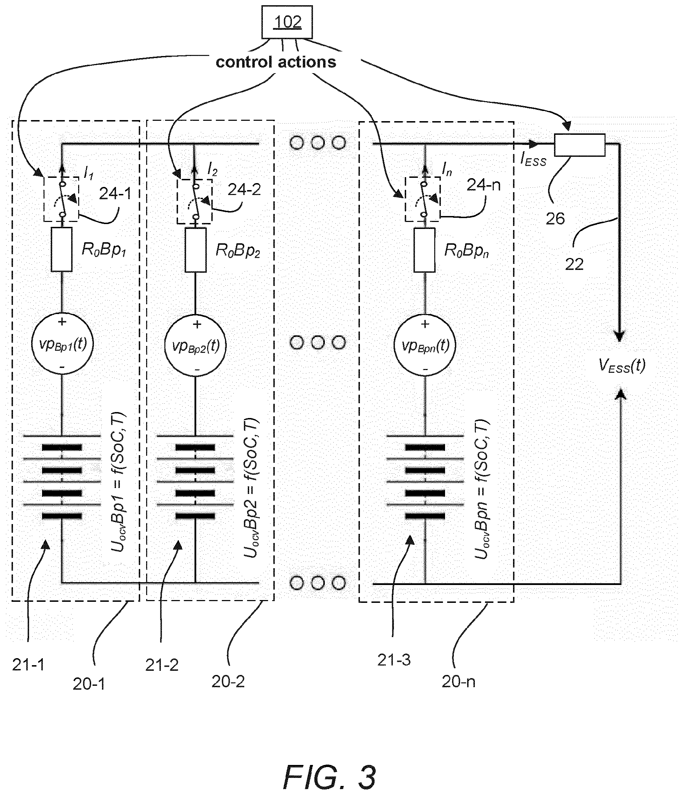

The vehicle **10** comprises a computer system **100** having processing circuitry **102.** The processing circuitry **102** is configured for controlling activation of the plurality of battery packs **20** in parallel connection with one another. The disclosure is applicable for parallel connected battery packs due to the fact that more power and capacity are needed for certain application areas. When multiple battery packs are in parallel connection, the term *activate* shall in contexts of the present disclosure refer to the simultaneous engagement of a battery pack to other connected one or more battery packs to contribute collectively to an electrical output or storage capacity. Activating parallel battery packs thus allows for increased current delivery capability, which enhances power performance and facilitates a shared load-bearing capacity during specific operational demands. Activation of battery packs may occur during the occurrence of different operational events, including but not limited to the provisioning of electrical power to an electric motor or combustion engine, the receiving and storage of electrical energy from the EVSE, the provisioning of power to auxiliary systems, on-board equipment, lifting mechanisms, climate control systems or other devices or the like. Regardless of what type of reason there is for activating a plurality of battery packs in parallel connection, this may be done by causing transmission of control signals or specific commands to the BMS **30.** The BMS **30** thereby dynamically manages the activation of battery packs **20** based on the received control signals or specific commands from the processing circuitry **102.** This will be described in more detail with further reference to **FIG. 2****,** showing an exemplary single battery pack, and **FIG. 3****,** showing a parallel connection of a plurality of battery packs.

**FIG. 2** shows an exemplary battery pack **20** comprising a battery circuit **22** having multiple battery cells **21.** The open-circuit voltage *U_{OCV}* of each battery cell **21** is a function of the state of charge and temperature *U_{OVC}* = *f* (*SoC, T*)*.* The battery pack **20** further includes a load *R*₀, representing the internal ohmic resistance of the battery pack **20,** and the current through this node is denoted as *I*(*t*). The battery pack **20** further comprises a first controllable load **26-1** and a second controllable load **26-2.** In other examples any suitable number of controllable loads **26** can be realized. The controllable loads **26-1, 26-2** represent devices or systems that draw electrical power from the output of the battery pack **20,** such as a heater device, chiller device, electric machine, or practically any other device or auxiliary load having an electric output that can be controlled (e.g. increased or decreased). The first controllable load **26-1** introduces short-term polarization effects. It includes a parallel-connected resistor *R*₁ and capacitor *C*₁. Short-term polarization effects are phenomena that occur temporarily during certain conditions, such as high current demand, high charge/discharge rates, temperature extremes, partial state of charge operation, sudden changes in load, aging and wear, impurities or contaminants, or incomplete charging cycles, affecting the behaviour of the battery pack **20.** The second controllable load **26-1** introduces long-term polarization effects. It includes a parallel-connected resistor *R*₂ and capacitor *C*₂. Long-term polarization effects are more persistent phenomena that affect the performance of the battery pack **20** over an extended period, such as cycling and cycling depth, state of charge extremes, consistently elevated temperatures, impurities and side reactions, overcharging or over-discharging, internal resistance changes or particle agglomeration.

Further shown in **FIG. 2** is the processing circuitry **102,** which is merely for illustrative purposes shown in conjunction with the battery pack **20.** It shall however be understood that this is typically not the case, as the functionality of the processing circuitry **102** is typically implemented as a more central controller depending on the area of application, such as in a central computer system **100** of a vehicle **10.** In any event, the processing circuitry **102** is configured to cause various control actions with respect to components of the battery pack **20.**

The control actions involve an activation action of the battery pack **20.** This may be done by controlling the controllable contactor **24** to be closed or opened based on control signals received from the processing circuitry **102.** A control signal sent to the controllable contactor **24** may control the closing thereof. Electronically closing a controllable contactor is, *as such,* well known to the skilled person. However, in the present disclosure this is conditioned by the application of a compensation current that is adapted to counteract at least parts of a charge equalization current expected to be generated by the subsequent activation of an additional battery pack. Hence, the control actions carried out by the processing circuitry **102** further involve the determination of said compensation current, and the application of said compensation current. The activation of battery packs in conjunction with the determination and application of the compensation current will now be described in detail with further reference to the multiple battery packs **20-n** shown in **FIG. 3****.** While only one controllable contactor **24-n** is shown in **FIG. 3** per battery pack **20-n,** it shall be understood that each battery pack **20-n** in typical configurations may involve three of them; one positive contactor, one negative contactor, and one pre-charge contactor.

**FIG. 3** shows an exemplary battery arrangement involving a plurality of battery packs **20-1, 20-2, 20-n.** In this very example n is equal to three (i.e., the battery arrangement includes three battery packs), although it shall be understood that any alternative configuration of battery arrangements can alternatively be envisaged. Alternative configurations of battery arrangements may include any number of battery packs **20,** each having any number of battery cells, controllable contactors, loads, controllable loads, power sources, or other circuitry components.

Each battery pack **20** (*Bp*_{1-*n*}) includes a set of battery cells **21-1, 21-2, 21-n** with open-circuit voltage *U_{OCV}Bp*_{1-*n*} = *f*(*SoC, T*). Each battery pack **20** (*Bp*_{1-*n*}) also includes the polarization effect *v*_{*pBp*1-*n*}(*t*), internal ohmic resistance *R*₀*Bp*_{1-*n*}, controllable contactor **24-1, 24-2, 24-n** and current *I*_{1-*n*}. The sum of the open-circuit voltage *U_{OCV}Bp*_{1-*n*} and the voltage drop that occurs due to the internal ohmic resistance *R*₀ of each battery pack **20** results in the total overpotential. Over time, as the system stabilizes, the voltage will settle to the open-circuit voltage *U_{OCV}Bp*_{1-*n*} alone, without any additional overpotential. The controllable contactor **24** is a switch that can be controlled to connect each battery pack **20** to or from the battery circuit **22.** This is similar to the single battery pack **20** shown and explained with reference to **FIG. 2****,** with the difference that this battery arrangement includes three battery packs **20-1, 20-2, 20-n** and that the processing circuitry **102** may perform individual control to activate them one by one, for example by way of controlling the closing of the respective contactor **24-1, 24-2, 24-n.** The battery packs **20-1, 20-2, 20-n** are connected to a common controllable load **26.** The controllable load **26** represents a device or system that draws electrical power from the combined output of the three battery packs **20-1, 20-2, 20-n,** such as a heater device, chiller device, electric machine, or practically any other device which electric output is controllable. Moreover, a common voltage *V_{ESS}*(*t*) represents the collective voltage output of the three battery packs **20-1, 20-2, 20-n** as a result of combining the individual voltages of the battery packs **20-1, 20-2, 20-n,** and a common *I_{ESS}* is also provided. The controllable contactors **24-1, 24-2, 24-n** allow for selective activation or deactivation of each battery pack **20-1, 20-2, 20-n** in the battery circuit 22. When the controllable contactors **24-1, 24-2, 24-n** are closed, the battery packs **20-1, 20-2, 20-n** contribute to the common voltage *V_{ESS}*(*t*) and power delivery to the common controllable load **26.** In other battery arrangement examples, each battery pack may include a separate controllable load, or a subset of the battery packs may be connected to a common controllable load, while another subset of battery packs include a separate controllable load for each battery pack included in said another subset of battery packs.

A general control procedure of activating the battery packs may be realized according to the following. The processing circuitry **102** is configured to activate the first battery pack **20-1.** This is done by closing the contactor **24-1,** thus allowing current to flow from an outlet of the first battery cells **21-1,** through the battery circuit **22** via the controllable load **26** and back to an inlet of the battery cells **21-1.** At this time, the additional battery packs **20-2, 20-n** do not contribute to the common voltage *V_{ESS}*(*t*) and current *I_{ESS}* since they are not activated (their respective contactors **24-2, 24-n** may be opened).

It is now envisaged that the present power application requires more energy, thus requiring the activation of the additional battery packs **20-2, 20-n.** Thanks to the insights obtained by the inventors of the present disclosure, it is realized that a subsequent activation of additional battery packs **20-2, 20-n** may cause unwanted charge equalization currents to be generated in the battery circuit **22,** thereby inducing one or more of the disadvantageous effects mentioned in the background section. Therefore, instead of arbitrarily activating any number of additional battery packs **20-2, 20-n,** a more intelligent activation procedure is proposed, which involves a selective and individual activation of the additional battery packs **20-2, 20-n** based on a charge equalization current that is expected to be generated by a subsequent activation thereof.

The intelligent activation procedure involves determining a compensation current that is adapted to counteract at least parts of these unwanted charge equalization currents that are expected to be generated by the subsequent activation of the additional battery packs **20-2, 20-n** to the battery circuit **22.** In ideal operation conditions where all battery packs have exactly the same potential and internal resistance, there would be no equalization currents expected to be generated even when these are activated. However, in real-world scenarios, achieving perfect uniformity across all battery packs is practically impossible due to various factors, including but not limited to manufacturing variations, operating conditions and measurement limitations. Even within the same batch of batteries, individual batteries can have slight differences in capacity, self-discharge rates and internal resistance due to manufacturing variances. This is especially the case for different batches of batteries made by different manufacturers. Operating conditions such as temperature, age and usage history can also lead to variations in individual battery performance. Moreover, measuring the exact potential of each pack with perfect accuracy is impractical in certain applications, especially in high-voltage applications. Therefore, even if the initial potentials appear the same, these slight variations can cause small charge equalization currents to flow between the various battery packs to maintain balance over time. The charge equalization currents are accordingly *expected* to be generated due to the existence of these variations. For example, a first battery pack may have an open-circuit voltage of 700 V, and a second battery pack an open-circuit voltage of 702 V. In this example, the activation of these two exemplary battery packs in the same parallel configuration will cause an automatic balancing to occur so as to equalize a common open-circuit voltage to 701 V. In contexts of the present disclosure, a *compensation current* shall accordingly be interpreted as a current that, at least to some extent, prevents the equalization currents that are expected to occur from flowing between the battery pack that is to be subsequently activated and the other battery packs already included and activated in the battery circuit.

In some examples, the processing circuitry **102** is configured to determine the compensation current by a static estimation. The static estimation predicts the value of the compensation current based on a value of the charge equalization current that is expected to be generated by the activation of an additional battery pack. The value of the compensation current may vary depending on how excessive the charge equalization currents are. Typical values of the compensation current have been shown to range between 2 V and 3 V, but this is not to be seen as limiting in any way. Too low compensation current values may not mitigate the charge equalization currents sufficiently, but too high compensation current values may negatively affect various components of the battery circuit, such as the contactors **24-1, 24-2. 24-n.** It may also lead to violation of battery discharge abilities.

The static estimation may be based on empirical data of previous compensation current determinations in battery packs. The empirical data may be one or more of performance data, health data, environmental data, aging data, activation data, and auxiliary data. Generally, this data may affect the compensation current that is to be generated in different ways. The exemplary empirical data may be considered one by one, several combined, or all combined, optionally as a weighted value. The static estimation may be based on a machine learning model, such as a machine learning model trained for solving a predictive task involving a mapping between input features (empirical data) to a desired output (the statically estimated value of the compensation current).

Performance data may include voltage and current profiles during activation, which can provide insights into an expected initial behaviour and/or potential stress experienced during activation. Performance data may include temperature variations during activation, which may indicate potential issues with heat generation or uneven cell balancing. Performance data may include energy consumption during activation, which may analyze the energy used during activation which may assist in assessing efficiency and identifying potential losses.

Health data (e.g. state of health, SoH) may include a capacity, such as a remaining capacity after activation, which can assist in understanding the impact of activation on overall battery capacity and potential degradation. Health data may include cell voltage data after activation, which can reveal any imbalances within the pack after activation relating to individual cell voltages. Health data may include internal resistance measurements, which can analyze changes in internal resistance for providing insights into the health of the battery pack.

Environmental data may correlate environmental factors with activation performance, including factors such as humidity or temperature, etc.

Aging data may relate to age and usage history of the battery pack, thus contextualizing how prior usage may affect activation behaviour.

Activation data may include time taken for the pack to be activated, which can assist in understanding the activation speed and potential delays in a system startup. Activation data may include a number of activation attempts typically required to activate an additional battery pack and whether there may be any issues with the activation process or communication between the battery pack and the computer system.

Auxiliary data may include error codes or warnings, system-related data of other units of the HV component, ESS, BMS or computer system, etc., load profile of the battery circuit, communication protocols used, maintenance history or logs, calibration and sensory information, external events or system disturbances, user-related data, cost and efficiency data, compliance data, and the like.

The compensation current may be determined as a part of the charge equalization current, e.g. 50%, 80% or 99% thereof, or a value that corresponds to the expected charge equalization current (i.e., substantially the same value). The compensation current may be determined in a compensation current range. The compensation current range may involve a first limit value being a maximum discharge ability of the battery pack to be activated. The maximum discharge ability of a battery pack is also known as a continuous discharge rate or maximum sustained discharge rate, referring to the highest current a battery pack can safely deliver continuously without experiencing damage or reduced lifespan. That is, the maximum discharge ability may be understood as the maximum rate at which the battery pack can be drained while maintaining its performance and integrity. Failure to meet this limit value in the compensation current range may cause excessive heat generation, electrode damage, performance degradation or lifespan reduction, to name some issues. The compensation current range is therefore preferably capped at this limit value in one end. In the other end, the compensation current range may comprise a second limit value being a minimum charge ability of the battery pack. This may offer some room to regulate the lower limit value based on e.g. system characteristics, battery properties, ambient conditions, application area, etc. The minimum charge ability of the battery pack may be substantially zero. That is, the compensation current range (*ccr*) can be seen as *minimum charge ability < ccr < maximum discharge ability.*

The compensation current may be based on a maximum allowed system limit. Hence, while the compensation range could in some examples include values up to the maximum discharge rate, some system requirements may cause the compensation current to be capped at a maximum allowed system limit which is specific to the area of application in which the battery packs are applied. The maximum allowed system limit may thus not allow a compensation current that is as high as the maximum discharge ability of the battery pack to be activated. The maximum allowed system limit may be determined by properties of the controllable load **26,** or other loads of the battery circuit **22.**

Once having determined the compensation current using any of the approaches discussed above, the processing circuitry **102** is configured to apply the compensation current to currently activated battery packs **20** within the battery circuit **22.** In the example of **FIG. 3** the battery pack that is currently activated is the first battery pack **20-1.** The compensation current may be applied to the first battery pack **20-1** by way of controlling the controllable load **26.** When the controllable load **26** is controlled to be decreased (i.e. reduce its resistance), the current in the battery circuit **22** increases, thereby introducing an excess current that can correspond to the compensation current. The compensation current is preferably applied before the additional battery pack **20-2** has been activated, although some variations may be realized where the compensation current is applied after the additional battery pack **20-2** has been activated, or optionally about the same time as the additional battery pack **20-2** (e.g. control signals are sent one after the other from the processing circuitry **102,** possibly involving some minor signal delay) is activated.

Since the compensation current that at least partly counteracts the charge equalization currents expected to be generated by the activation of the additional battery pack **20-2** has now been introduced to the battery circuit **22,** the additional battery pack **20-2** can be activated. The charge equalization currents expected to be generated in response thereto are thereby mitigated by way the introduced compensation current that is introduced to the battery circuit **22.** Hence, even if the first battery pack **20-1** and the second battery pack **20-2** involves variations in potential, the inherent balancing therebetween are minimized. This may ensure compliance with power limits and enhance charging capabilities. Moreover, this approach may assist in avoiding lithium plating and safeguarding against battery degradation during charging processes. This strategic control may be particularly beneficial in challenging scenarios where charge equalization currents tend to be a greater issue, such as in cold weather conditions or situations with a high battery state of charge.

The above procedures of determining the compensation current, applying the compensation current, and activating an additional battery pack may be repeated for each additional battery pack to be activated. In the example of **FIG. 3****,** the remaining battery pack is the third battery pack **20-3.** The difference between the activation of the second battery pack **20-2** and the activation of the third battery pack **20-3** is that the compensation current is not only applied to the first battery pack **20-1,** but also to the second battery pack **20-2** since it is now included as an activated battery pack in the battery circuit **22.** The compensation may accordingly involve a different for each additional activation depending on presently activated battery packs in the battery circuit **22.**

In some examples, the activation of an additional battery pack **20-2, 20-n** may be based on a value of response signal data. In these examples, the processing circuitry **102** is configured to make one or more measurements of the battery circuit **22,** for instance at its terminals. The terminals form a closed loop for the current flow, so measurements at these points can allow assessment of overall performance of the battery pack, including voltage, current, resistance, and the like. The measurements are made after the compensation current has been applied to the battery circuit **22** to assess whether the application thereof provides an expected behaviour of the current within the battery circuit **22.** Accordingly, the additional battery pack **20-2, 20-n** is in these examples activated based on a value of the response signal data. To make the assessment as regards to how the compensation current affects the total current of the battery circuit **22,** the obtained response signal data may be compared to prestored data corresponding to measurements taken before the compensation current was applied. By way of applying the compensation current, assessing how the battery circuit **22** behaves, and responding to these changes in a subsequent battery pack activation, a more reliable activation control procedure may be obtained. This procedure may provide an improved charge equalization mitigation.

The order of which the battery packs **20-1, 20-2, 20-n** are to be activated may vary depending on the battery configuration. In some examples, the battery packs **20-1, 20-2, 20-n** are selected to be activated in a descending order of open-circuit voltages. In these examples, the first battery pack **20-1** is the battery pack having the highest open-circuit voltage, and the second battery pack **20-2** is the battery pack having the second highest open-circuit voltage, and so forth, until the battery pack having the lowest open-circuit voltage is selected for activation. In alternative examples this may be inverted, i.e., starting with the battery pack having the highest open-circuit voltage and selecting additional battery packs to be activated in an ascending order of open-circuit voltages. In yet alternative approaches, the activation selection may be randomized. However, the ascending/descending order is more easily predictable, which may provide a higher precision in the compensation current determination, and also with respect to power demands.

The compensation current determination and application, and the battery pack activation, may be carried out repeatedly until a time-out condition is met. This may be done automatically in response to the ongoing operation requiring the additional power/capacity from additional battery packs, for example due to an increased power demand being identified. The time-out condition may correspond to a point in time at which all of the battery packs in a battery system or a battery subsystem have been activated, thus maximizing what power that can be outputted by the system or subsystem. Alternatively, the time-out condition may correspond to a point in time when the battery circuit **22** to which the battery packs **20** are connected has reached a maximum feasible current throughput. The maximum feasible current throughput, which can also be referred to as the current carrying capability, refers to a highest current the battery circuit **22** can safely handle on a continuous basis without being subjected to issues or damages such as excessive heating, voltage sag, component limitations, etc. This may depend on internal properties such as wire gauge, material, circuit design, environmental factors, etc.

If the time-out condition is a maximum feasible current throughput, and an ongoing operation reaches said time-out condition, some examples may involve the introduction of a delay timer during which no further battery packs are activated. Hence, instead of cancelling (or optionally restarting) the operation, the operation may be set on hold until obtained battery data indicates an increase in the maximum feasible current throughput. This may indicate that continued operation of repeatedly determining a compensation current, applying the compensation current, and activating additional battery packs is possible. The battery data may be obtained from the battery management system **30,** and the resumption of the operation may be done by cancelling the delay timer and setting a new time-out condition based on the updated maximum feasible current throughput indicated by the battery data. Several different factors may contribute to an increase in the maximum feasible current throughput, such as dynamic derating based on real-time conditions including changes in temperatures, loads or power demands, short-term surges or pulses, BMS adjustments, or the like.

To exemplify the above examples of a delay timer, a non-ideal scenario is envisaged. In an ideal scenario, the electrical system aims to distribute current across all battery packs until the total load is met or the system reaches its maximum current capacity. However, this may not always be the case due to the maximum feasible current throughput as explained above. The incorporation of the delay timer can therefore allow for some flexibility. For instance, if the system has a maximum current capacity of 15 A, but the demand is 20 A, the delay timer comes into play, giving the system time to adapt until the criteria are eventually met. One noteworthy consideration is the impact of loads on temperature, particularly when one of the loads functions as a heater. The increase in temperature can potentially enhance the available range, affecting the feasibility of drawing a specific amount of current. If the system cannot immediately fulfill the current demand, waiting becomes a strategic option. During this waiting period, the temperature gradually rises, influencing the power capability of the system. Continuous reporting by the battery packs through the BMS **30** may ensure that changes in temperature and power ability are consistently monitored. Consequently, when the temperature increases, the power capacity of the system also rises, providing an opportunity to meet the desired current requirements at a later point in time. This dynamic process may allow for efficient management of current demands, taking into account both system capabilities and the influence of temperature on performance.

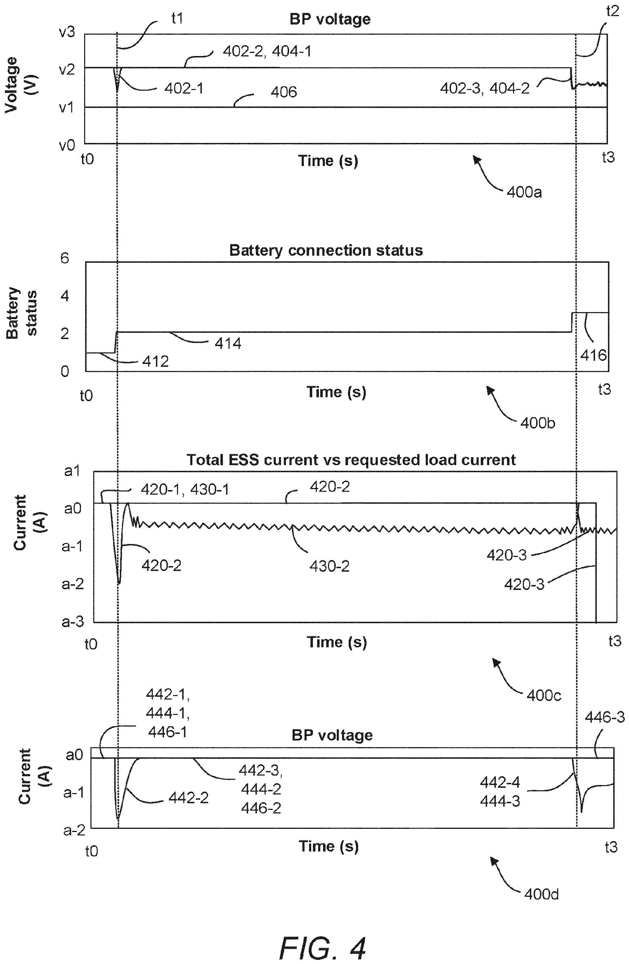

With further reference to **FIG. 4****,** an exemplary procedure for controlling activation of a plurality of battery pack is shown generally according to teachings of the present disclosure. In this example there are three battery packs being sequentially activated, starting with a first battery pack, then a second, and finally a third. The first and second battery pack involve similar open-circuit voltages, approximately v2, whereas the third battery pack involves an open-circuit voltage of approximately v3. These values v2, v3 may be any suitable voltage used in battery packs, such as any value in the range 600-800 V, or the like. In order to connect the third battery pack in parallel with the first and second battery packs without any risk of causing charge equalization currents, a compensation current determination and application is done by the processing circuitry of the computer system. The subplots **400a, 400b, 400c, 400d** shown in **FIG. 4** share the x-axis (time) from t0 seconds (start) to approximately t3 seconds (end). T0 may be zero, and t3 any time that the procedure can take. Purely by way of example, t3 may be 10 seconds, 100 seconds, 500 seconds, 1000 seconds, or any value less or higher that is suitable for different application areas. At **t0** the first battery pack is already activated, at **t1** the second battery pack is activated, and at **t2** the third battery pack is activated.

The first subplot **400a** shows voltage over time. At **t1** the second battery pack is activated in parallel connection with the first battery pack, causing a short oscillation at **402-1** of the voltage of the first battery pack (pre-charge current). The voltage of the first and second battery packs are then balanced at **402-2, 404-1** until **t2** occurs. Because of the voltages of the first and second battery packs being substantially similar, i.e. v2, there are no charge equalization currents flowing between the packs. At **t2** when the third battery pack is connected, the voltages of the first and second battery oscillate and stabilize at **402-3, 404-2.** During the entire time shown in subplot **400a,** the voltage of the third battery pack remains at **406.**

The second subplot **400b** shows battery status over time. The battery status indicates how many of the battery packs are activated. As seen at **t0**, the first battery pack **412** is activated. At **t1**, the second battery pack **414** is activated, and at **t2,** the third battery pack **416** is activated.

The third subplot **400c** shows two lines **420, 430** of currents over time. The first line **420** illustrates a total current of the ESS, and the second line **430** illustrates a requested load current. The total current of the ESS includes the sum of currents used for charging, discharging, and any internal losses within the ESS itself. The requested load current is the current drawn by the electrical load connected to the system, such as the controllable load **26** discussed herein. At **t2,** the total current of the ESS meets the requested load current. This means that the ESS is supplying the necessary electrical current to meet the demand of the connected load. This is when the connection attempt of the third battery pack is made. The compensation current is determined between the time periods **t1** and **t2,** i.e., after the second battery pack has been activated in parallel connection with the first battery pack but before the third battery pack has been activated. The processing circuitry may then be configured to notify a master controller of the battery packs, such as a controller in the ESS overseeing the operation of the battery packs, of the determined compensation current. This is so it can be applied in conjunction with (typically before) the activation of the third battery pack.

The fourth subplot **400d** shows charge equalization current over time for the first battery pack **442,** the second battery pack **444,** and the third battery pack **446.** In the fourth subplot **400d** when the third battery pack is connected at **t2,** it is shown that the compensation current has effectively eliminated (a0 = 0) charge equalization currents flowing from the third battery pack at **446-3** to the first and second battery packs at **442-4, 444-3.**

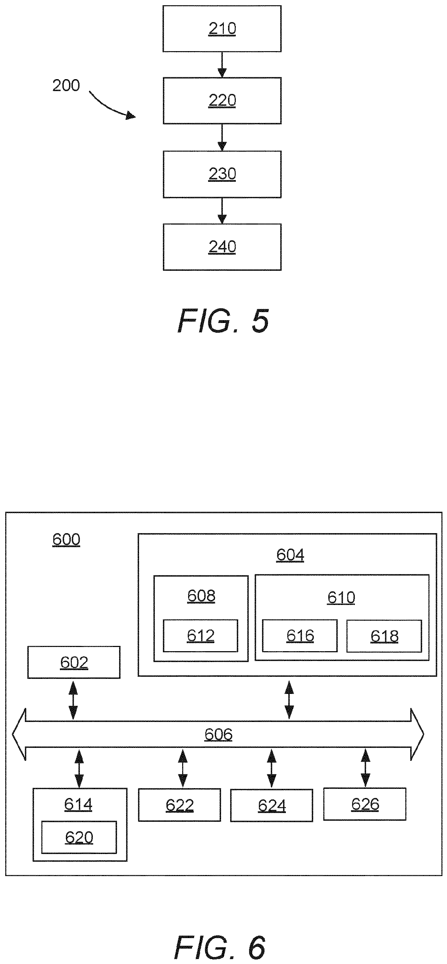

**FIG. 5** is a flowchart of a computer-implemented method **200** for controlling activation of a plurality of battery packs **20** in parallel connection. The method **200** comprises activating **210** a first battery pack **20-1** from among the plurality of battery packs **20.** The method **200** further comprises determining **220** a compensation current which is adapted to counteract at least parts of a charge equalization current expected to be generated by a subsequent activation of an additional battery pack **20-n** from among the plurality of battery packs **20.** The method **200** further comprises applying **230** the compensation current to currently activated battery pack(s) **20.** The method **200** further comprises activating the additional battery pack **20-n.**

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system (100; 600) for controlling activation of a plurality of battery packs (20) in parallel connection, the computer system (100; 600) comprising processing circuitry (102; 602) configured to: activate a first battery pack (20-1) from among the plurality of battery packs (20); determine a compensation current which is adapted to counteract at least parts of a charge equalization current expected to be generated by a subsequent activation of an additional battery pack (20-n) from among the plurality of battery packs (20); apply the compensation current to currently activated battery pack(s) (20); and activate the additional battery pack (20-n).

Example 2: The computer system (100; 600) of example 1, wherein the processing circuitry (102; 602) is further configured to, sequentially for each additional battery pack (20-n) to be activated, perform the determination of the compensation current, the application of the compensation current, and the activation of the additional battery pack (20-n).

Example 3: The computer system (100; 600) of any of examples 1-2, wherein the processing circuitry (102; 602) is configured to: obtain response signal data from a battery circuit (22) to which the plurality of battery packs (20) are connected after the compensation current has been applied, and activate the additional battery pack (20-n) based on a value of the response signal data.

Example 4: The computer system (100; 600) of any of examples 1-3, wherein the processing circuitry (102; 602) is configured to determine the compensation current by a static estimation.

Example 5: The computer system (100; 600) of example 4, wherein the static estimation involves setting a predetermined voltage value based on empirical data of previous compensation current determinations in battery packs.

Example 6: The computer system (100; 600) of example 5, wherein the empirical data is one or more of performance data, health data, environmental data, aging data, activation data, and auxiliary data.

Example 7: The computer system (100; 600) of any of examples 5-6, wherein the processing circuitry (100; 600) is configured to provide the empirical data as training data to a machine learning model, the machine learning model being configured to map the empirical data to a prediction of the compensation current.

Example 8: The computer system (100; 600) of any preceding example, wherein the processing circuitry (102; 602) is configured to determine the compensation current in a compensation current range comprising a first limit value being a maximum discharge ability of the battery pack (20-n) to be activated.

Example 9: The computer system (100; 600) of example 8, wherein the compensation current range comprises a second limit value being a minimum charge ability of the battery pack (20-n) to be activated.

Example 10: The computer system (100; 600) of any of examples 1-9, wherein the processing circuitry (102; 602) is configured to determine the compensation current based on a maximum allowed system limit.

Example 11: The computer system (100; 600) of example 10, wherein the maximum allowed system limit is determined by properties of one or more controllable loads (26) in a battery circuit (22) to which the plurality of battery packs (20) are connected.

Example 12: The computer system (100; 600) of any of examples 1-11, wherein the first battery pack (20-1) comprises a higher open-circuit voltage compared to each one of the additional battery packs (20-n) to be activated, and wherein the processing circuitry (102; 602) is configured to activate each additional battery pack (20-n) in a descending order of open-circuit voltage.

Example 13: The computer system (100; 600) of any of examples 1-12, wherein the processing circuitry (102; 602) is configured to activate a battery pack (20) by controlling a closing of a controllable contactor (24) of a battery circuit (22) to which the plurality of the battery packs (20) are connected.

Example 14: The computer system (100; 600) of any of examples 1-13, wherein the processing circuitry (102; 602) is configured to apply the compensation current by controlling a controllable load (26) of a battery circuit (22) to which the plurality of the battery pack (20) are connected.

Example 15: The computer system (100; 600) of any of examples 1-14, wherein the processing circuitry (102; 602) is configured to repeatedly determine the compensation current, apply the compensation current, and activate the additional battery pack (20-n), until a time-out condition is met.

Example 16: The computer system (100; 600) of example 15, wherein the time-out condition is met once the plurality of battery packs (20) are activated.

Example 17: The computer system (100; 600) of any of examples 15-16, wherein the time-out condition is met once a battery circuit (22) to which the plurality of battery packs (20) are connected has reached a maximum feasible current throughput.

Example 18: The computer system (100; 600) of example 17, wherein in response to the battery circuit (22) reaches the maximum feasible current throughput, the processing circuitry (102; 602) is configured to: introduce a delay timer during which no further battery packs (20) are activated, obtain battery data from a battery management system (30), and in response to the battery data indicating an increase in the maximum feasible current throughput, cancel the delay timer and cause a continued operation of repeatedly determining the compensation current, applying the compensation current, and activating additional battery packs (20-n).

Example 19: The computer system (100; 600) of any of examples 1-18, wherein the plurality of battery packs (20) are arranged in a high-voltage component (40).

Example 20: The computer system (100; 600) of example 19, wherein the high-voltage component (40) is arranged in an energy storage system (50).

Example 21: The computer system (100; 600) of example 20, wherein the energy storage system (50) is arranged in a vehicle (10).

Example 22: A high-voltage component (40) comprising the plurality of battery packs (20) of any of examples 1-18, wherein the processing circuitry (102; 602) of the computer system (100; 600) of any of examples 1-18 is configured to control activation of the plurality of battery packs (20).

Example 23: An energy storage system (50) comprising the high-voltage component (40) of example 22.

Example 24: A vehicle (10) comprising the energy storage system (50) of example 23.

Example 25: A computer-implemented method (200) for controlling activation of a plurality of battery packs (20) in parallel connection, comprising: activating (210) a first battery pack (20-1) from among the plurality of battery packs (20); determining (220) a compensation current which is adapted to counteract at least parts of a charge equalization current expected to be generated by a subsequent activation of an additional battery pack (20-n) from among the plurality of battery packs (20); applying (230) the compensation current to currently activated battery pack(s) (20); and activating (240) the additional battery pack (20-n).

Example 26: A computer program product comprising program code for performing, when executed by the processing circuitry (102; 602), the method (200) of example 25.

Example 27: A non-transitory computer-readable storage medium comprising instructions, which when executed by the processing circuitry (102; 602), cause the processing circuitry (102; 602) to perform the method (200) of example 25.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100; 600) for controlling activation of a plurality of battery packs (20) in parallel connection, the computer system (100; 600) comprising processing circuitry (102; 602) configured to:
activate a first battery pack (20-1) from among the plurality of battery packs (20);
determine a compensation current which is adapted to counteract at least parts of a charge equalization current expected to be generated by a subsequent activation of an additional battery pack (20-n) from among the plurality of battery packs (20);
apply the compensation current to currently activated battery pack(s) (20); and
activate the additional battery pack (20-n).

2. The computer system (100; 600) of claim 1, wherein the processing circuitry (102; 602) is further configured to, sequentially for each additional battery pack (20-n) to be activated, perform the determination of the compensation current, the application of the compensation current, and the activation of the additional battery pack (20-n).

3. The computer system (100; 600) of any of claims 1-2, wherein the processing circuitry (102; 602) is configured to:
obtain response signal data from a battery circuit (22) to which the plurality of battery packs (20) are connected after the compensation current has been applied, and
activate the additional battery pack (20-n) based on a value of the response signal data.

4. The computer system (100; 600) of any of claims 1-3, wherein the processing circuitry (102; 602) is configured to determine the compensation current by a static estimation involving setting a predetermined voltage value based on empirical data of previous compensation current determinations in battery packs, wherein the empirical data is one or more of performance data, health data, environmental data, aging data, activation data, and auxiliary data.

5. The computer system (100; 600) of claim 4, wherein the processing circuitry (100; 600) is configured to provide the empirical data as training data to a machine learning model, the machine learning model being configured to map the empirical data to a prediction of the compensation current.

6. The computer system (100; 600) of any of claims 1-5, wherein the processing circuitry (102; 602) is configured to determine the compensation current in a compensation current range comprising:
a first limit value being a maximum discharge ability of the battery pack (20-n) to be activated, and
a second limit value being a minimum charge ability of the battery pack (20-n) to be activated.

7. The computer system (100; 600) of any of claims 1-6, wherein the processing circuitry (102; 602) is configured to determine the compensation current based on a maximum allowed system limit, the maximum allowed system limit being determined by properties of one or more controllable loads (26) in a battery circuit (22) to which the plurality of battery packs (20) are connected.

8. The computer system (100; 600) of any of claims 1-7, wherein the processing circuitry (102; 602) is configured to apply the compensation current by controlling a controllable load (26) of a battery circuit (22) to which the plurality of the battery pack (20) are connected.

9. The computer system (100; 600) of any of claims 1-8, wherein the processing circuitry (102; 602) is configured to repeatedly determine the compensation current, apply the compensation current, and activate the additional battery pack (20-n), until a time-out condition is met.

10. The computer system (100; 600) of claim 9, wherein the time-out condition is met:
once the plurality of battery packs (20) are activated, or
once a battery circuit (22) to which the plurality of battery packs (20) are connected has reached a maximum feasible current throughput.

11. The computer system (100; 600) of claim 10, wherein in response to the battery circuit (22) reaches the maximum feasible current throughput, the processing circuitry (102; 602) is configured to:
introduce a delay timer during which no further battery packs (20) are activated,
obtain battery data from a battery management system (30), and
in response to the battery data indicating an increase in the maximum feasible current throughput, cancel the delay timer and cause a continued operation of repeatedly determining the compensation current, applying the compensation current, and activating additional battery packs (20-n).

12. A vehicle (10) comprising the computer system (100; 600) of any of claims 1-11.

13. A computer-implemented method (200) for controlling activation of a plurality of battery packs (20) in parallel connection, comprising:
activating (210) a first battery pack (20-1) from among the plurality of battery packs (20);
determining (220) a compensation current which is adapted to counteract at least parts of a charge equalization current expected to be generated by a subsequent activation of an additional battery pack (20-n) from among the plurality of battery packs (20);
applying (230) the compensation current to currently activated battery pack(s) (20); and
activating (240) the additional battery pack (20-n).

14. A computer program product comprising program code for performing, when executed by the processing circuitry (102; 602), the method (200) of claim 13.

15. A non-transitory computer-readable storage medium comprising instructions, which when executed by the processing circuitry (102; 602), cause the processing circuitry (102; 602) to perform the method (200) of claim 13.
